## Europäisches Patentamt

## European Patent Office

## Office européen des brevets

(11) Veröffentlichungsnummer: **0 130 617**
**B1**

# (12) EUROPÄISCHE PATENTSCHRIFT

(45) Veröffentlichungstag der Patentschrift:
**18.05.88**

(21) Anmeldenummer: **84107740.7**

(22) Anmeldetag: **04.07.84**

(51) Int. Cl.⁴: **A 01 D 78/12**

(54) **Heuwerbungsmaschine.**

(30) Priorität: **05.07.83 DE 3324094**

(43) Veröffentlichungstag der Anmeldung:
**09.01.85 Patentblatt 85/2**

(45) Bekanntmachung des Hinweises auf die Patenterteilung:
**18.05.88 Patentblatt 88/20**

(84) Benannte Vertragsstaaten:
**AT DE FR GB IT SE**

(56) Entgegenhaltungen:
**CH-A-546 532**
**DE-A-2 059 269**
**DE-A-2 527 646**
**DE-A-2 619 867**
**DE-A-2 719 797**

(73) Patentinhaber: **Wilhelm Stoll Maschinenfabrik GmbH, D-3325 Lengede/Broistedt (DE)**

(72) Erfinder: **Knüsting, Gregor, Dipl.- Ing., Danzig Strasse 4, D-3325 Lengede/Broistedt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf eine Heuwerbungsmaschine zum Schwaden mit gasteuerten Zinken, mit mindestens einem Zinkenkreisel, wobei

(a) (je)der Zinkenkreisel eine aufrechtstehende Gestellachse, als Zinkenkreisel(dreh)achse, besitzt,

(b) auf der Gestellachse eine rotationsmäßig stillstehende Steuerkurve angeordnet und ein angetriebenes Drehgestell gelagert ist,

(c) das Drehgestell die Steuerkurve van oben übergreift und mehrere Zinkentragarme trägt, die in ihrer Höhenlage rechtwinklig zur Gestellachse (1) verlaufen, und

(d) jeder Zinkentragarm im wesentlichen abwärtsgerichtete Zinken(paare) trägt und um die eigene Längsachse kurvengesteuert verschwenkbar in einem tangentialen Traglager lagert, welches am Drehgestell lösbar angebracht ist und sich dabei außerhalb der Steuerkurve erstreckt.

Eine solche gattungsbildende Heuwerbungsmaschine ist durch die DE-A1-2 719 797 vorbekannt. Sie ist zwar als Universalmaschine, nämlich einerseits zum Zetten/Wenden mit ungesteuerten Zinken und anderseits zum Schwaden mit gesteuerten Zinken, konzipiert, stellt jedoch auch einen "Schwader" dar. Die Zinkentragarme verlaufen beim "Zetten/Wenden" radial zur Gestellachse und beim "Schwaden" tangential zu einem Kreis, der außerhalb der Steuerkurve liegt. Beim Schwaden durchqueren die "tangentialen" Zinkentragarme die von der Drehgestell-Haube abgedeckte Kreisfläche auf einer zwischen der Steuerkurve und dem Haubenrand verlaufenden Sekante und ein drehfest mit dem jeweiligen Zinkentragarm verbundener Steuerhebel faßt mit einer Steuerrolle, deren Achse etwa rechtwinklig zur Zinkentragarm-Längsachse sowie radial zur Zinkenkreisel(dreh)achse verläuft, in bei tangentialen Zinkentragarmen üblicher Weise von der Seite in die Steuerkurve ein.

Bei dieser durch die DE-A1-2 719 797 vorbekannten Ausführung ist jedes Traglager von einem Formkörper (Gußteil) gebildet und mit einem angetriebenen inneren Drehgestellkörper sowie einer dagegen verdrehbaren und in zwei Verdrehstellungen festsetzbaren Haube verbunden. Die Traglager-Verbindung zur Haube dient dabei der Traglager-Verschwenkung zwecks Einstellung der Arbeitsstellung "Schwaden" oder "Zetten-Wenden". Jedes Traglager besitzt eine auf einer am Drehgestellkörper angeordneten, somit gestellfesten, Achse lagernde erste Lagerröhre, eine von einem Zinkentragarm durchfaßte zweite Lagerröhre sowie eine der Verbindung zur Haube dienende dritte Lagerröhre, in welche ein an der Haube angeschraubter Kugelkopf einfaßt und eine Gelenkverbindung herstellt. Die beiden ersgenannten Lagerröhren stehen mit ihren geometrischen Achsen rechtwinklig zueinander und liegen auf einer durch die Zinkentragarm-Längsachse gehenden Ebene, wogegen die letztgenannte, den Kugelkopf aufnehmende Lagerröhre seitlich neben der den Zinkentragarm aufnehmenden Lagerröhre liegt, in Zinkentragarm-Axialrichtung mit Abstand zu der erstgenannten, am Drehgestell gelagerten Lagerröhre vorgesehen ist sowie gegenüber den beiden anderen Lagerröhren schräggestellt ist. Insgesamt ist jedes Traglager kompliziert und schwer ausgebildet sowie umständlich und zeitraubend herstellbar. Von größtem Nachteil für die Traglager-Herstellung ist dabei, daß alle drei Lagerröhren jeweils mit einer präzisen (paßgenauen) und somit kostenaufwendigen Lagerbohrung zu versehen sind sowie außerdem ihre Achsen dreidimensional versetzt sind und dadurch umständliche, zeitraubende Ausrichtarbeiten erforderlich machen - beides bedingt eine kostspielige Fertigung. Es ist weiterhin nachteilig, daß jede Zinkentragarm-Einheit - die aus einen Traglager, einem Zinkentragarm mit Zinken(paaren) sowie einem eine Steuerkurbel bildenden Steuerhebel mit Steuerrolle besteht - auf einer nur einendig befestigten, als Haltekörper und Schwenkachse dienenden Rundstange lagert, weshalb dies Teil verhältnismäßig lang, stabil und letztendlich schwer ausgeführt sowie stabil angebracht sein muß, um die Stoß- und/oder Biegebelastungen, die vom jeweiligen Zinkentragarm eingeleitet werden, aufnehmen zu können. Die langen Rundstangen für die Traglager-Lagerung sind platzraubend und machen ein hohes Drehgestell erforderlich. Die für die Anordnung der Zinkentragarm-Traglager benötigten Teile sind, wie aus dem Vorbeschriebenen zu entnehmen ist, konstruktionsaufwendig, schwer und kostspielig und erfordern ein großes Baumaß in der Maschinenhöhe im Bereich zwischen der Zinkentragarm-Achse und dem das Drehgestell antreibenden Antriebsrad, insbesondere Zahnrad. Aufgrund der großen Bauhöhe wird für die Drehgestell-Aufbewahrung beim Hersteller und/oder Händler viel Stauraum benötigt, was oftmals recht nachteilig ist. Auch die einzelnen Traglager sind in nachteiliger Weise äußerst sperrig und benötigen für Lagerzwecke großen Stauraum.

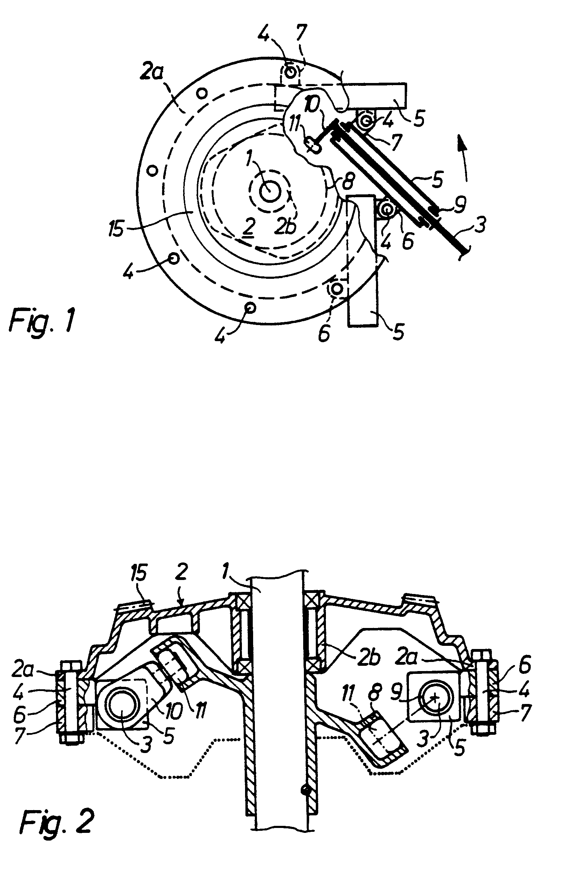

Durch die DE-A1-2 059 269 ist eine Heuwerbungsmaschine zum Schwaden vorbekannt, bei welcher kurvengesteuert um die eigene Längsachse verschwenkbare Zinkentragarme radial zur Gestellachse angeordnet sind. Die Traglager für die Zinkentragarme sind von Lagerhülsen gebildet, die durch seitlich angreifende Streben untereinander verbunden werden. Hierbei besteht der große Nachteil, daß bei ausreichend langer Traglager-Ausbildung - was zwecks guter Zinkentragarm-Lagerung erstrebenswert ist - sich ein großer Drehgestell-Durchmesser ergibt und daher das Drehgestell beim Hersteller und/oder Händler für die Lagerhaltung viel Stauraum (Lagerraum) benötigt. Die feste Anordnung der Traglager führt bei Beschädigung auch nur eines Traglagers dazu, daß das ganze Drehgestell unbrauchbar wird. Das Drehgestell ist wegen der Traglager-Festlegung auf einer recht kurzen Strecke der Traglager-Gesamtlänge verhältnismäßig labil. Bei der Schweißkonstruktion (Fig. 1 bis 6) besteht auch die Gefahr des Verzuges (Schweißverzugs) bei der Herstellung, wodurch aufwendige Richtarbeiten erforderlich werden können, um die Lagerachsen aller Traglager in die erforderliche Lage auszurichten. Bei der Gußkonstruktion (Fig. 7 und 8) entfällt zwar eine sonst ggf. erforderliche Richtarbeit, es besteht jedoch der Nachteil, daß der Steuertrieb erst nach Demontage des Getriebes zugänglich wird und somit für einen Austausch von Steuerrollen - die bzw. deren Lagerung das schwächste Glied des Steuertriebs darstellen - besonders umständliche, zeitraubende Demontage- und Montagearbeiten anfallen.

Durch die CH-A-546 532 ist eine Heuwerbungsmaschine zum Schwaden vorbekannt, deren Zinkenträger auf bzw. in radialen Gestellarmen, sogenannten Speichen, lagern sowie zum Rechzinken-Abheben vom Boden um diese Speichen zwangsgesteuert verschwenkt werden. Bei diesem "Schwader" sind die einzelnen Speichen wie bei einem "Zetter" an einer angetriebenen Nabe unverschwenkbar angeordnet. Gemäß einer Ausführungsform (Fig. 14 und 15) weist die Nabe mehrere nach außen stehende Ansätze mit rechteckigem Querschnitt auf, die an ihrem freien Ende mit einer vertikalen Bohrung versehen sind. Jeweils zwischen zwei solcher Ansätze ist eine radial zur Gestellachse verlaufende rohrförmige Speiche lösbar montiert, wobei pro abnehmbarer Speiche nur ein bolzenartiges Befestigungselement verwendet wird, welches den Naben-Ansatz sowie zwei benachbarte, einander mit gelochten Laschen überlappende Speichen durchfaßt. Jede der abnehmbaren Speichen/Gestellarme ist mit zwei seitlichen, höhenmäßig gegeneinander versetzten, in der Draufsicht spiegelbildlich ausgeführten und angeordneten Laschen mit vertikaler Bohrung versehen. Die vertikalen Befestigungselemente jeder Speiche liegen auf einer rechtwinklig zur Speichen-Längsachse verlaufenden Linie und bilden eine "Kippachse", um welche die radiale Speiche bei Einwirkung eines größeren Kraftmoments auf einen Zinkenträger kippen kann - insgesamt ergibt sich eine labile Drehgestell-Konstruktion.

Der Erfindung liegt die Aufgabe zugrunde, eine verbesserte Heuwerbungsmaschine der eingangs erwähnten Bauart zu schaffen, bei der das Drehgestell einen Einblick auf den Steuertrieb zuläßt sowie höhenmäßig raumsparend, d. h. zwischen Antriebsrad und Zinkentragarm-Achsebene niedrig bauend, und mit kleiner Gestellgrundfläche ausgeführt sein kann sowie die einzelnen Zinkentragarme in einfacher Weise auswechselbar und sicher festgelegt sind und die von den Zinken aus ins Drehgestell eingeleiteten Kräfte auch bei verhältnismäßig kleinem Abstand zwischen der Zinkenkreiselachse, d. h. der sogen. Gestellachse, und den Befestigungsstellen sicher aufgefangen werden.

Erfindungsgemäß wird dies durch Heuwerbungsmaschinen zum Schwaden, sogen. "Schwadern", gelöst, wie sie jeweils in den selbstständigen Ansprüchen 1, 2, 3 definiert sind.

Bei solchen Schwadern kann das Drehgestell trotz zentraler Steuerkurve und der im seitlichen Abstand dazu verlaufenden Zinkentragarm-Traglagern eine niedrige Bauhöhe sowie eine kleine Grundfläche haben und trotzdem sind die einzelnen Traglager sowohl sicher angeordnet als auch einfach demontierbar gehalten und der Steuertrieb zu Kontrollzwecken von unten her leicht einsehbar. Der spezielle Verbund tangentialer Traglager wirkt selbststabilisierend und vermag auch den Drehgestell-Randbereich auszustreben - bei alten Ausführungen ist das Drehgestell nur gegenüber seiner Nabe abzustreben bzw. entsprechend steif zu gestalten, wogegen der Randbereich durch den Traglager-Verbund stabilisiert wird. Durch die Zinken bzw. einen Zinkentragarm in ein Zinkentragarm-Traglager in dessen Axialrichtung eingeleitete Momente führen nicht zu einem Verkanten um eine durch Befestigungsschrauben oder Verbindungsstellen gebildete querverlaufende "Kippachse", sondern werden durch zwei mit größerem Axialabstand hintereinanderliegende Befestigungsstellen kompensiert sowie in den Traglager-Verbund eingeleitet, ohne daß der Drehgestellkörper, beispielsweise Haubenkörper, einer größeren Biegebelastung ausgesetzt wird. Von großem Vorteil ist dabei, daß die Kräfteverteilung innerhalb des Traglager-Verbundes und dessen sich zwischen benachbarten Traglagern erstreckenden Befestigungs und Verbindungsmitteln erfolgt und der die Traglager tragende Körper nicht nennenswert belastet wird. Da die Krafteinleitung jedes Zinkentragarmes außerdem auf verhältnismäßig breiter Basis erfolgt, ist die effektive Belastung äußerst gering. Die günstige Kraftverteilung läßt es zu, daß auch bei einem Drehgestell, bei dem die am weitesten von der Gestellachse (Drehgestell-Achse) entfernte Zinkentragarm-Befestigungsstelle in noch verhältnismäßig kleinem Abstand (Hebelmaß) vorgesehen ist, zur Erzielung einer stabilen Ausführung verhältnismäßig dünnwandiges Material eingesetzt werden kann bzw. trotz kleinem Drehgestellkörper ein großer Kreiseldurchmesser (Arbeitskreis) zulässig ist, ohne daß Haltbarkeitsprobleme auftreten. Aufgrund der stark tangentialen Anordnung der Zinkentragarme, bei der auch die Achs(linien)verlängerung eines Zinkentragarmes nicht durch die Steuerkurve verläuft, lassen sich viele Steuerhebel auf kleinem Raum (d. h. auf kleiner Grundfläche) ohne gegenseitige Funktionsbeeinträchtigung unterbringen, so daß der Schwader im Bedarfsfall trotz eines im Durchmesser kleinen Drehgestells mit vielen durch eine im wesentlichen seitwärts offene Steuerkurve gesteuerten Zinkentragarmen bestückt sein kann. Sowohl das Drehgestell ohne montierte Traglager als auch jedes Traglager ist raumsparend (kompakt) ausgebildet und benötigt wenig Stauraum. Ein weiterer Vorteil der Heuwerbungsmaschinen gemäß Anspruch 1 und 2 besteht darin, daß pro Zinkentragarm-Einheit lediglich eine Befestigungsschraube (worunter sowohl eine Schraube als auch ein mit Gewinde versehener Bolzen verstanden wird) benötigt wird.

Gemäß einer bevorzugten Ausführungsform ist das Drehgestell von einem hutartigen Haubenkörper mit zentraler Lagernabe gebildet, dessen Außenrand gegenüber der Hauben-Wandstärke verbreitert ist und einen Widerlagerring (insbesondere in der Art einer Hutkrempe) mit ebener Anlagefläche für die einzelnen, jeweils an zwei Stellen, jedoch nur mittels eines einzigen Verbindungsteiles pro Arm-Anzahl, in Einspannverbindung/Klemmverbindung befestigten Zinkentragarm-Einheiten bildet.

In Weiterbildung des Erfindungsgedankens ist das Drehgestell von einem haubenförmigen Formkörper (Guß- oder Schmiedeteil) gebildet, dessen obere Wandung eine Tellerkegelzahnrad-Verzahnung aufweist. Diese einstückige Ausführung ist einfach zu fertigen und reduziert die Anzahl der verschiedenen Bauteile der Maschine (was insbesondere für die Lagerhaltung beim Hersteller vorteilhaft und kostensparend ist) sowie die Montagezeit - es ergibt sich dadurch eine besonders einfache und wirtschaftliche Maschinenausbildung. Dabei kann der Drehgestellkörper als gedrehtes Werkstück ausgeführt sein, dem ein Formteil-Rohling zugrunde liegt, so daß lediglich die Lagernabe und der Widerlagerring einer mechanischen Bearbeitung (Dreharbeit) bedarf, wodurch letztendlich eine wesentliche Reduzierung der Herstellungskosten gewährleistet ist und sich daraus ein großer volkswirtschaftlicher Nutzen ergibt.

Weiterhin können die Traglager klappsymmetrisch ausgebildet und um eine symmetrisch ausgebildete Steuerkurve angeordnet sein, so daß sich mit den gleichen Teilen rechtsdrehende oder linksdrehende Zinkenkreisel mit gesteuerten Zinkentragarmen zusammensetzen lassen.

Auf der Zeichnung sind Ausführungsbeispiele dar Erfindung dargestellt und werden im folgenden naher erläutert. Es zeigen:

Fig. 1 eine schematische Draufsicht auf eine erfindungsgemäße Zinkentragarm-Befestigungsanordnung am angetriebenen Drehgestell(körper) eines Zinkenkreisels einer Heuwerbungsmaschine,

Fig. 2 einen Vertikal schnitt durch einen Kreiselrechen mit gesteuerten Zinken, im Bereich der Antriebs- und Steuerungseinrichtung,

Fig. 3 eine Draufsicht auf zwei isoliert dargestellte benachbarte Zinkentragarm-Einheiten,

Fig. 4 eine Draufsicht auf zwei benachbarte, abgeänderte Zinkentragarm-Einheiten, die u. a. auch ineinandergeschachtelt sind,

Fig. 5 eine Draufsicht auf zwei benachbarte, weiter abgeänderte Zinkentragarm-Einheiten, die sowohl ineinandergeschachtelt als auch jeweils in einer Dreipunktabstützung gehalten sind, und

Fig. 6 einen Vertikalschnitt durch einen Zinkenkreiselrechen-Teilbereich mit abgeändertem, aus Teilen zusammengeschraubten Drehgestell.

Die erfindungsgemäße Heuwerbungsmaschine ist als Schwader mit einem Zinkentragarm-Steuerungstrieb ausgebildet.

Sie besitzt mindestens einen angetrieben umlaufenden Zinkenkreisel (Kreiselrechen), bei dem auf einer rotationsmäßig stillstehenden Gestellachse (Drehachse) 1 ein mit einer Antriebseinrichtung gekoppeltes bzw. eine eigene Antriebseinrichtung aufweisendes Drehgestell 2 drehbar lagert, an welchem einzelne speichenartig angeordnete Zinkentragarme 3 - die selbst oder über einen gesonderten Zinkenträger die insbesondere im wesentlichen abwärtsgerichteten Zinken(paare) tragenmittels entsprechender Lager- und/oder Befestigungsteile in erfindungsgemäßer Weise jeweils unter Zuhilfenahme vorzugsweise nur eines einzigen Befestigungselementes (Verbindungsteiles) 4 pro Zinkentragarm-Einheiten in einer solchen Weise befestigt ist, daß eine lösbare Verbindung sowohl zwischen Zinkentragarm-Einheit und Drehgestell(körper) 2 als auch zwischen benachbarten Zinkentragarm-Einheiten besteht. Bei einer bevorzugten Maschinen-Ausführung sind die Lagerelemente, sogenannte Traglager 5/5', der einzelnen Zinkentragarme 3 jeweils mit zwei im seitlichen Abstand zueinander sowie jeweils auf einer anderen Seite von der Zinkentragarm-Längsachse liegenden Befestigungsstellen versehen. Zur Bildung dieser Befestigungsstellen sind Befestigungsösen bzw. Durchgangslöcher vorhanden, die mit 6 und 7 beziffert sind und von einem Befestigungselement 4, vorzugsweise von einer Schraube (bzw. Bolzen mit Gewindeenden), zumindest teilweise durchfaßt werden.

Gemäß Fig. 1 liegen die Zinkentragarme 3 tangential, verlaufen zwischen dem Gestellrand und einer Steuerkurve 8 und die Befestigungsstellen/Befestigungslöcher 6, 7 sind in Zinkentragarm-Längsrichtung mit Abstand zueinander vorgesehen, wobei sie in diagonaler Anordnung liegen. Jede Lochachse/Kanalachse verläuft etwa senkrecht zur Zinkentragarm-Längsachse, vorzugsweise etwa vertikal, und liegt in weiter bevorzugter Weise auf einem Kreis, dessen Mittelpunkt die Kreiselrechen-Gestellachse 1 ist. Diese Befestigungsanordnung, wie sie prinzipiell der Fig. 1 zu entnehmen ist, gewährleistet, daß auch bei verhältnismäßig geringem Abstand der einzelnen Befestigungsstellen (Pos. 6 und 7) zur Gestellachse 1 ein erhältnismäßig großer Abstand zwischen den beiden eine Zinkentragarm Einheit mit dem Drehgestell 2 verbindenden Befestigungselementen vorliegt, was letztlich eine stabile Armbefestigung ergibt. Da dabei außerdem benachbarte Zinkentragarm-Einheiten untereinander verbunden sind, belasten die über die Zinken eingeleiteten Kräfte in vorteilhafter Weise nicht nur einen kleinen Drehgestell-Bereich, sondern gehen kräfteverteilend in den Verbund aus sich überlappenden Zinkentragarm-Einheiten ein, so daß aufgrund breiter, günstiger Kraftverteilung sich letztlich eine besonders stabile und haltbare Konstruktion ergibt. Hierdurch ist es möglich, Material mit geringerer Wandstärke einzusetzen, um trotzdem ausreichende Stabilität zu gewährleisten. Vorteilhaft ist auch, daß diese kompakte und stabile Ausführung pro Zinkentragarm jeweils nur ein(e) dornartige(s) Befestigungselement bzw. Schraube erfordert. Der Zinkentragarm-Verbund vermag auch das Drehgestell 2 im Randbereich zu stabilisieren (auszusteifen).

Die Befestigungsösen 6, 7 können verschiedenartig ausgebildet, dabei ggf. von gelochten Laschsen (Befestigungslaschen) oder Buchsen gebildet, und angeordnet sein.

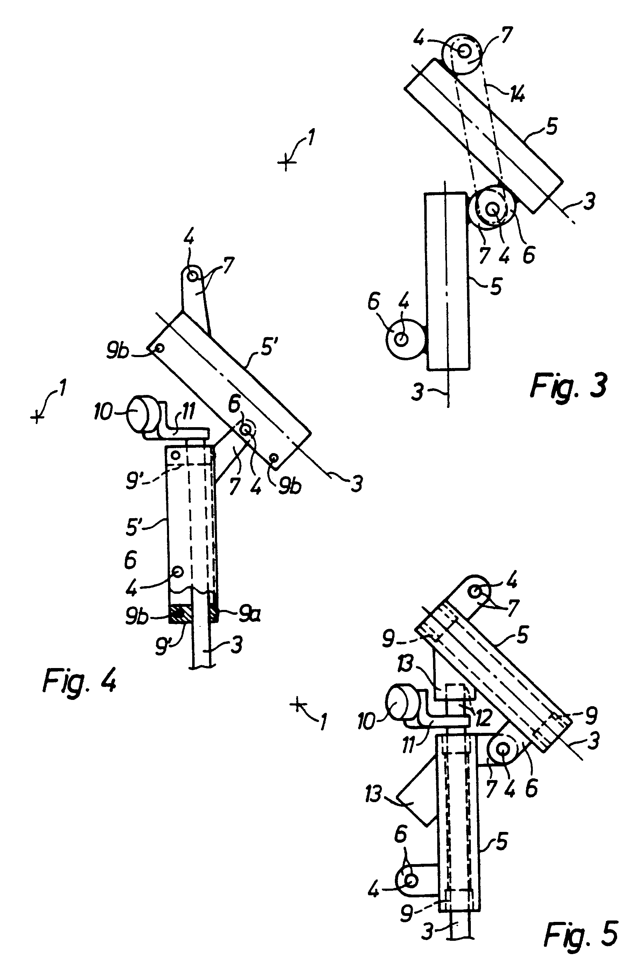

Bei der aus Fig. 3 ersichtlichen Ausführung sind dieselben von Exzenterbuchsen gebildet und herstellungsmäßig derart an jedem Zinkentragarm-Traglager 5 angebracht, daß Material- und/oder Fertigungstoleranzen ausgeglichen und die erforderlichen Zuordnungsmaße eingehalten werden. Dabei besteht das Traglager 5 aus einem Vierkantrohr, vorzugsweise Quadratrohr, und die Befestigungsösen 6, 7 sind von exzentrisch gelochtem Rundprofil gebildet sowie in einer Vorrichtung derart um die Lochachse verdreht - dann in dieser ausgerichteten Position befestigt, vorzugsweise verschweißt - , daß der Achsabstand zwischen beiden Löchern eines jeden Traglagers 5 sowie die Lage dieser Löcher in bezug auf die Schwenkachse des Zinkentragarmes 3 und auf das steuerkurvenseitige Traglager-Ende (somit auch die Traglager-Lage in bezug auf die Gestellachse/Drehachse 1 und eine um diese angeordnete Steuerkurve 8) fixiert ist. Gleichzeitig wird in der Ausrichtvorrichtung auch die Höhenlage der zwecks Überlappungsmöglichkeit und Schaffung identischer Traglager 5 für sämtliche Zinkentragarme 3 höhenmäßig gegeneinander versetzt angeordneten (d. h. einerseits oberhalb und andererseits unterhalb der durch die Zinkentragarm-Schwenkachse verlaufenden Horizontalebene liegenden) Befestigungsösen 6, 7 fixiert. Es ergeben sich somit identische und klappsymmetrische Traglager 5, die sowohl für rechtsdrehende als auch für linksdrehende Kreiselrechen verwendbar sind und außerdem Einpaßarbeiten/Ausrichtarbeiten weitgehend erübrigen. Zur Anbringung der exzentrischen Buchsen als toleranzausgleichend ausrichtbare Befestigungsösen 6 und 7 kann auch ein anderes Profilrohr verwendet werden, wobei es jedoch vorteilhaft ist, wenn es zwei abgeflachte Seitenflächen - als Anlageflächen für die Buchsen - besitzt.

Die einzelnen Traglager 5 können in ihren Endbereichen Gleitlager oder Wälzlager als Lagerteile 9/9' zur Zinkentragarm-Lagerung aufweisen.

Anstelle eines Rohres als Traglager 5 kann auch ein offenes Querschnittsprofil verwendet werden, wobei eine U- oder C-Form bevorzugt ist. Derartige Traglager sind mit 5' beziffert und prinzipmäßig in Fig. 4 dargestellt. Dabei lassen sich die einzelnen Zinkentragarme 3 einschließlich ihrer Lagerteile 9' in die Traglager 5' leicht von der Seite (entsprechend dargestellter Konstruktion) bzw. von unten her (nicht dargestellte Ausführungsform) einsetzen und im Bedarfsfall wieder demontieren.

Bei der in Fig. 4 gezeigten Ausführungsform ist das Traglager-Querschnittsprofil seitlich offen und hält die Lagerteile 9' für die Zinkentragarm-Lagerung in einer verdrehsicheren sowie vorzugsweise auch axialfixierten Lage. Jedes Lagerteil 9' ist dabei mit einem Zapfen 9a versehen, welcher in die Traglager-Wandung, vorzugsweise in einen U- oder C-Steg einfaßt. Ein quer zur Zinkentragarm-Längsachse verlaufendes Sicherungselement 9b durchfaßt dabei das Lagerteil 9' sowie die Profilschenkel des offenen Traglager-Profils; das Lagerteil 9' wird in Klemmhalterung festgelegt. In bevorzugter Weise besteht dies Lagerteil 9' aus einem Kunststoff-Formteil.

Das aus Fig. 4 ersichtliche Traglager 5' ist insbesondere von einem flachgelegt-U-förmigen Profil gebildet und weist im Bereich seines U-Profilsteges eine gelochte Befestigungslasche als Befestigungsöse 6 sowie im Bereich seiner U-Profilschenkel zur Bildung von Befestigungsösen 7 zwei koaxiale Löcher auf. Dabei sind benachbarte Traglager 5' ineinandergeschachtelt zusammengefügt, wobei der mit 6 bezifferte Befestigungsvorsprung zwischen die Profilschenkel des benachbarten Traglagers 5' einfaßt und entsprechend der vorbeschriebenen Ausführung gemäß Fig. 1 mittels eines die beiden Traglager 5' durchfassenden, bolzenartigen Befestigungselementes 4 untereinander sowie mit dem Drehgestell 2 lösbar verbunden sind. Bei allen beanspruchten Ausführungsformen sind die Zinkentragarm-Traglager 5/5' unter das Drehgestell 2 geschraubt. Obwohl teilweise nicht dargestellt, kann dabei unter die Traglager 5, 5' eine zusätzliche Stabilisierungseinrichtung, wie Sicherungsring (Reifen), Verbindungslaschen (Streben) od. dgl., vorgesehen sein, die mit Durchgangslöchern auf den Traglager-Befestigungselementen (Schrauben, Bolzen od. dgl.) 4 stecken. Bei einer Ausführung mit Verbindungslaschen 14 (vgl. strichpunktierte Darstellung in Fig. 3) überlappen sich benachbarte Verbindungslaschen In bevorzugter Weise sind dieselben schuppenartig (wie Schindeln) überlappend angeordnet.

Bei einer weiter abgeänderten Ausführungsform ist eine dritte Abstützstelle am Drehgestell 2 vorgesehen, um auch bei leichter Bauweise eine günstige Stabilität zu gewährleisten

Das Drehgestell 2 kann verschiedenartig ausgeführt sein. In bevorzugter Weise ist es als eine etwa glockenartige Haube ausgebildet. Insbesondere zeigt sie im Vertikalschnitt eine Hutform, wobei die Hutkrempe als Widerlager(ring) 2a ausgebildet ist. Dies die Traglager 5/5' tragende Widerlager 2a wird entweder bereits bei der Teilefertigung oder erst in der Endmontage mit den für die Zinkentragarm Anordnung erforderlichen Durchgangslöchern (eins pro Zinkentragarm 3) versehen.

Die Fig. 5 zeigt eine Traglager-Anordnung mit einer dritten Abstützstelle

Diese dritte Abstützstelle ist dabei nahe, d. h. im Bereich eines Steuerhebels 10 einer benachbarten Zinkentragarmeinheit angeordnet. Die Steuerhebel sind drehfest mit dem Zinkentragarm 3 verbunden und wirken über eine Steuerrolle 11 mit der Steuerkurve 8 zusammen.

Für die dritte Abstützstelle kann jeder Zinkentragarm 3 am steuerkurvenseitigen Ende mit einem Fixierelement 12, vorzugsweise einem Vorsprung, versehen sein, welcher an einem am benachbarten Traglager 5/5' angebrachten Höhenanschlag 13 anliegt. In bevorzugter Weise ist das Fixierelement 12 von einem am inneren Zinkentragarm-Ende angeordneten Zapfen gebildet und faßt in eine Aufnahme des benachbarten Zinkentragarm-Traglagers 5/5' ein.

Die Zapfen-Aufnahme kann von zwei mit Spalt übereinanderliegenden Wandungen oder von einem buchsenartigen Ansatz gebildet sein.

Das Drehgestell 2 trägt obenendig ein Antriebsrad 15 oder ist an seiner oberen Deckwandung als Antriebsrad ausgebildet (vgl. Fig. 2). Die einstückige Ausbildung ist besonders vorteilhaft, da sich eine wirtschaftliche Fertigung ergibt. Dabei kann es als Gußkörper (vgl. Fig. 2, die jedoch lediglich das Aufbauprinzip aufzeigen soll) oder als Schmiedestück ausgeführt sein. In beiden Fällen ist es bevorzugt, die Verzahnung gleich bei der Haubenherstellung anzuformen. Die Haubenform ist in geeigneter Form ausgesteift/ausgestrebt.

Der untere Randbereich der Drehgestellhaube ist in jedem Fall als Widerlager(ring) 2a für die Traglager-Anordnung ausgebildet. Das Drehgestell 2 kann unter Zwischenschaltung von Gleit- und/oder Wälzlagern auf der rotationsmäßig feststehenden Gestellachse 1 frei drehbar, je doch axialfixiert lagern.

Das Drehgestell 2 ist zwecks einfacher, kostengünstiger und wirtschaftlicher Herstellung als Drehwerkstück ausgebildet, dem vorzugsweise ein Formkörper (Guß- oder Schmiedeteil) zugrundeliegt, so daß nur noch geringe mechan. Bearbeitung erforderlich ist. Es ist so gestaltet, daß - abgesehen von einer evtl.

noch erforderlichen Zahnbehandlung bzw. Erstellung der Verzahnung - am Formkörper (Grundkörper) nur noch

a) eine Achsbohrung zur Aufnahme der Lagerelemente,

b) eine Abdrehung seines Randbereiches, insbesondere an der Bodenseite, zur Schaffung einer Widerlagerfläche für alle Zinkentragarm-Traglager 5/5', sowie ggf. (d. h. sofern nicht bereits bei der Formkörper-Herstellung geschehen)

c) pro Zinkentragarm jeweils ein Schraubenloch zur Aufnahme des jeweiligen Befestigungselementes 4

erstellt werden muß. In jeden Fall weist das Drehgestell 2 eine Lagernabe und eine flansch- oder haubenartige Haltewandung für die Traglager-Anordnung auf.

Bei einer Schwader-Ausführung mit kurvengesteuerten Zinken ist es bevorzugt, das insbesondere als Gußkörper ausgebildete Drehgestell 2 derart zu gestalten, daß der untere Randbereich, welcher als Widerlager(ring) 2a für die Anordnung des Traglager-Verbundes dient, in der Grundfläche so bemessen ist, daß die Steuerkurve 8 nach oben hin - ggf. auch zumindest zum Teil zur Seite hin - überdeckt wird. Dabei können außerdem die Traglager 5/5'-derart in der Höhe/Axiallage angebracht sein, daß jeder Steuerhebel 10 gegenüber der Horizontalen etwa im gleichgroßen Winkel nach oben und unten verschwenkbar ist (vgl. Fig. 2).

Die Steuerkurve 8 ist vorzugsweise symmetrisch ausgebildet.

Entgegen der dargestellten Ausführung, bei der die Achse jeder Steuerrolle rechtwinklig zur Zinkentragarm-Längsachse und radial zur Gestellachse 1 verläuft, können die Steuerhebel 10 mit ihrer Steuerrolle nachlaufend oder vorlaufend angeordnet sein.

Ein erfindungsgemäß ausgeführter Schwader kann mit einem sogen. offenen, d. h. bodenseitig nicht geschlossenen, oder einem geschlossenen Gehäuse versehen sein. Dabei läßt sich die Steuerkurve 8 von einem Bodendeckel (bodenseitige Deckwandung) abschirmen, welcher vorzugsweise mit den gleichen Befestigungselementen 4 wie die Traglager 5/5' befestigt wird. Es besteht jedoch auch die Möglichkeit, das Bodenteil an der Gestellachse 1 zu befestigen.

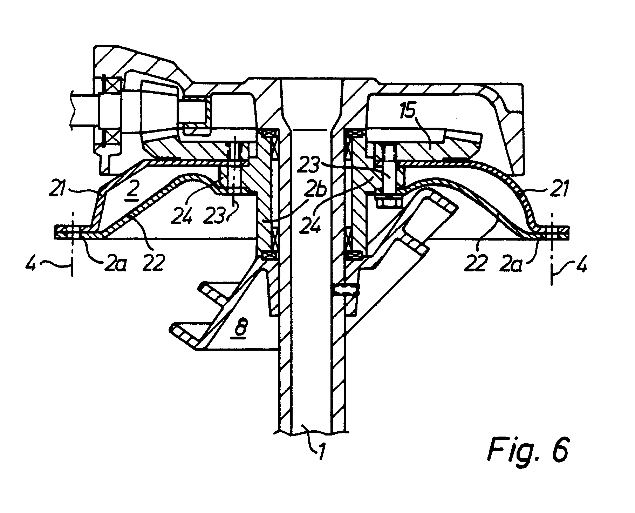

Um bei einer evtl. Drehgestell-Teilebeschädigung den Schaden möglichst gering zu halten und/oder auch ohne Gußhaube bzw. geschmiedeter Haube ein stabiles und leicht herstellbares Drehgestell 2 zu schaffen, ist dasselbe gemäß Fig. 6 - welches lediglich das Grundprinzip zeigen soll - als Schraubkonstruktion mit zwei in Dreiecksaussteifung übereinander angeordneten Haubenteilen 21, 22 ausgeführt.

Auch diese in sich formstabilen Haubenteile 21, 22 sind derart geformt, daß sie die zentrale Steuerkurve 8 von oben übergreifen und im äußeren Randbereich die Traglager 5/5' aufnehmen (tragen). Die beiden Haubenteile 21, 22 besitzen eine zentrale Durchstecköffnung für die Drehgestell-Nabe 2b. Im nabenseitigen Bereich sind sie mit Höhenabstand zueinander gehalten und im äußeren Randbereich liegen sie aneinander/aufeinander, so daß in der Radialausdehnung im Haubenquerschnitt von den Abstützpunkten ein Dreieck eingeschlossen wird. In bevorzugter Weise ist der Außendurchmesser und das zentrale Durchsteckloch beider Haubenteile 21, 22 gleich groß. Beide Haubenteile 21, 22 weisen in den Randbereichen deckungsgleich angeordnete Durchstecköffnungen für die Verbindungs und/oder Befestigungsschrauben auf - im äußeren Randbereich dienen die für die Traglager-Befestigung verwendeten Schrauben 4 gleichzeitig der Verbindung der Haubenteile 21, 22 und im Nabenbereich sind Schrauben 23 vorgesehen, welche die Haubenteile 21, 22 an der Nabe 2b, insbesondere einem mantelseitig vorspringenden Befestigungsring 24, lösbar befestigen. Als Befestigungsring 24 kann ein Flansch mit etwa achsparallelen Durchstecköffnungen für die Schrauben 23 oder eine Anzahl von Ösen/Augen mit entsprechenden Schrauben-Durchstecklöchern am Nabenkörper vorgesehen sein.

Wie aus der Zeichnung zu ersehen, liegt das Haubenteil 21 oberhalb und das Haubenteil 22 unterhalb des Befestigungsringes 24 und die diese drei Teile 21, 22, 24 durchsetzenden Schrauben 23 dienen gleichzeitig der Antriebsrad-Befestigung. Dabei sind die drehfest miteinander verbundenen Teile, nämlich Tellerkegelzahnrad 15, oberes Haubenteil 21, Befestigungsring 24 der Drehgestell-Nabe 2b und unteres Haubenteil 22, von unten her mittels gemeinsamer Schrauben 23 zusammengeschraubt.

Die Haubenteile 21; 22 sind im wesentlichen als zum Außenrand abfallende Formteile, vorzugsweise Stahlblech-Formlinge, ausgeführt und besitzen einen als Traglager-Wiederlager 2a ausgebildeten, vorzugsweise rechwinklig zur Drehgestellachse 1 verlaufenden Rand (vgl Fig. 6). Die Haubenform des oberen Haubenteiles 21 kann einen gebogenen (gerundeten) Übergangsbereich (vgl rechte Drehgestell-Hälfte in Fig. 6) oder einen abgewinkelten Übergangsbereich (vgl. linke Drehgestell-Hälfte in Fig. 6) zwischen der oberen Tragwandung und dem Traglager-Befestigungsrand (Pos. 2a) aufweisen. Um trotz eines gewissen Höhenabstandes zwischen den inneren Befestigungsstellen der beiden Haubenteile 21, 22 die Haubenhöhe insgesamt verhältnismäßig niedrig zu halten und einen geringen Höhenabstand zwischen dem Antriebsrad/Tellerkegelzahnrad 15 und der Steuerkurve 8 einzuhalten, ist das untere Haubenteil 22 außerhalb des Befestigungsringes 24 im Bereich des höchstgelegenen Steuerkurven-Bereichs nach oben hin ausgebeult (hochgewölbt) - vgl. Fig. 6, welche links und rechts der Gestellachse 1 zwei bevorzugte Querschnittsgestaltungen zeigt. Dabei kann das untere Haubenteil 22, welches im wesentlichen als Ausstrebungsteil vorgesehen ist, zwischen den inneren und den äußeren Befestigungsstellen vollflächig geschlossen oder mit Durchbrüchen ausgebildet sein.

Bei sämtlichen Ausgestaltungen des Drehgestells 2 (vgl. Fig. 2 und 6) und der daran in teilweiser Überlappung lösbar angebrachten Traglagern 5/5' (die beispielsweise gemäß Fig. 1, 3 oder 5 ausgeführt sein können) ist es zur Schaffung einer einfach und kostengünstig herstellbaren Konstruktion unter Verwendung nur weniger unterschiedlicher Einzelteile für links- und rechtsdrehende Kreiselrechen besonders vorteilhaft und eine Ausführung bevorzugt, bei der die Traglager 5, 5' selbst klappsymmetrisch ausgebildet und um eine symmetrisch ausgebildete Steuerkurve 8 angeordnet sind sowie Zinkentragarme 3 aufnehmen (lagern), deren einseitig belastbare Zinken bzw. Zinkengruppen um 180° verschwenkbar (wendbar) und wahlweise in einer der beiden Schwenk-Endlagen festsetzbar sind und deren Steuerkurbel - bestehend aus einem am Zinkentragarm 3 drehfest angebrachten Steuerhebel 10 und einer in die Steuerkurve 8 Zwangsgeführt einfassenden Steuerrolle 11 - mit der Zinken-Wendeachse fluchtet, und außerdem die Traglager 5, 5' am Drehgestell 2 wahlweise in einer Anordnung für einen rechtsdrehenden oder für einen linksdrehenden Kreiselrechen festschraubbar sind. Eine solche Ausführung läßt eine äußerst wirtschaftliche Fertigung zu und verursacht beim Maschinen-Hersteller und Händler auch nur geringe Lagerhaltungs-Kosten.

Um die Fertigung zu vereinfachen und trotzdem eine stabile Konstruktion zu erhalten, kann die feststehende Gestellachse 1 entsprechend Fig. 6 am Getriebegehäuse mit angegossen sein. In bevorzugter Weise ist das Getriebegehäuse des bevorzugten Kegelrad-Getriebes untenseitig mit einem zentralen rohrartigen Ansatz versehen, auf welchem die rotationsmäßig stillstehende Steuerkurve 8 bewegungsstarr befestigt ist und darüber das Drehgestell 2 lagert. Im unteren Bereich, insbesondere in den Hohlraum eingesteckt, nimmt diese Röhre einen Zapfen, Holm, Ständer(rohr) od. dgl. zur Anordnung (Befestigung) der mit dem Wiesenboden Kontakt habenden Stütz- und/oder Fahreinrichtung des Kreiselrechens auf.

**Patentansprüche**

1. Heuwerbungsmaschine zum Schwaden mit gesteuerten Zinken, mit mindestens einem Zinkenkreisel, wobei
- (je)der Winkenkreisel eine aufrechtstehende Gestellachse (1), als Zinkenkreiselachse, besitzt,
- auf der Gestellachse (1) eine rotationsmäßig stillstehende Steuerkurve (8) angeordnet und ein angetriebenes Drehgestell (2) gelagert ist,
- das Drehgestell (2) die Steuerkurve (8) von oben übergreift und mehrere Zinkentragarme (3) trägt, die in ihrer Höhenlage rechtwinklig zur Gestellachse (1) verlaufen, und
- jeder Zinkentragarm (3) im wesentlichen abwärtsgerichtete Zinken(paare) trägt und um die eigene Längsachse kurvengesteuert verschwenkbar in einem tangentialen Traglager (5, 5') lagert, welches am Drehgestell (2) lösbar angebracht ist und sich dabei außerhalb der Steuerkurve (8) erstreckt.
dadurch gekennzeichnet, daß
-am Drehgestell (2) ein mit Schraubenlöchern versehener Widerlagerring (2a) zur lösbaren Anordnung der Traglager (5, 5') vorhanden ist,
- jedes tangentiale Traglager (5, 5') an zwei Stellen mit dem Widerlagerring (2a) verschraubt ist, wobei die beiden Verschraubungsstellen jeweils an entgegengesetzten Seiten eines Traglagers (5, 5') und in Zinkentragarm-Axialrichtung mit Abstand zueinander angeordnet sind,
- benachbarte Traglager (5, 5') sich mit Befestigungsösen (6, 7) überlappen, und
-pro Zinkentragarm (3) nur eine Befestigungsschraube (4) verwendet wird, welche in etwa vertikaler Anordnung sowohl den Drehgestell-Widerlagerring (2a) als auch die Befestigungsösen (6, 7) von benachbarten Traglagern (5, 5') durchfaßt und die Traglager (5, 5') in Klemmverbindung festlegt.

2. Heuwerbungsmaschine zum Schwaden mit gesteuerten Zinken, mit mindestens einem Zinkenkreisel, wobei
- (je)der Zinkenkreisel eine aufrechtstehende Gestellachse (1), als Zinkenkreiselachse, besitzt,
- auf der Gestellachse (1) eine rotationsmäßig stillstehende Steuerkurve (8) angeordnet und ein angetriebenes Drehgestell (2) gelagert ist,
- das Drehgestell (2) die Steuerkurve (8) von oben übergreift und mehrere Zinkentragarme (3) trägt, die in ihrer Höhenlage rechtwinklig zur Gestellachse (1) verlaufen, und
- jeder Zinkentragarm (3) im wesentlichen abwärtsgerichtete Zinken(paare) trägt und um die eigene Längsachse kurvengesteuert verschwenkbar in einem tangentialen Traglager (5, 5') lagert, welches am Drehgestell (2) lösbar angebracht ist und sich dabei außerhalb der Steuerkurve (8) erstreckt.
dadurch gekennzeichnet, daß
- am Drehgestell (2) ein mit Schraubenlöchern versehener Widerlagerring (2a) zur lösbaren Anordnung der Traglager (5') vorhanden ist,
- jedes tangentiale Traglager (5') an zwei Stellen mit dem Widerlagerring (2a) verschraubt ist, wobei die beiden Verschraubungsstellen jeweils an entgegengesetzten Seiten eines Traglagers (5') und in Zinkentragarm-Axialrichtung mit Abstand zueinander angeordnet sind,
- benachbarte Traglager (5') mit Befestigungsösen (6, 7) ineinandergreifen (ineinandergeschachtelt sind), und
- pro Zinkentragarm (3) nur eine Befestigungsschraube (4) verwendet wird, welche in etwa vertikaler Anordnung sowohl den Drehgestell-Widerlagerring (2a) als auch die ineinanderfassenden Befestigungsösen (6, 7) von benachbarten Traglagern (5') durchfaßt und die Traglager (5') in Klemmverbindung festlegt.

3. Heuwerbungsmaschine zum Schwaden mit gesteuerten Zinken, mit mindestens einem Zinkenkreisel, wobei
- (je)der Zinkenkreisel eine aufrechtstehende Gestellachse (1), als Zinkenkreisel(dreh)achse, besitzt,
- auf der Gestellachse (1) eine rotationsmäßig stillstehende Steuerkurve (8) angeordnet und ein angetriebenes Drehgestell (2) gelagert ist,
- das Drehgestell (2) die Steuerkurve (8) von oben übergreift und mehrere Zinkentragarme (3) trägt, die in ihrer Höhenlage rechtwinklig zur Gestellachse (1) verlaufen, und
- jeder Zinkentragarm (3) im wesentlichen abwärtsgerichtete Zinken(paare) trägt und um die eigene Längsachse kurvengesteuert verschwenkbar in einem tangentialen Traglager (5, 5') lagert, welches am Drehgestell (2) lösbar angebracht ist und sich dabei außerhalb der Steuerkurve erstreckt,
dadurch gekennzeichnet, daß
- das Drehgestell (2) als eine Haube ausgebildet ist, die einen mit Schraubenlöchern versehenen Widerlagerring (2a) aufweist, an dem unten die einzelnen tangentialen und untereinander verbundenen Traglager (5) anliegen,
- jedes Traglager (5) an zwei Stellen mit dem Widerlagerring (2a) verschraubt ist, wobei die beiden Verschraubungsstellen jeweils an entgegengesetzten Seiten eines Traglagers (5, 5') und in Zinkentragarm-Axialrichtung mit Abstand zueinander angeordnet sind,
- jedes Traglager (5) in der Ebene in einer Breipunktabstützung gehalten ist, d. h. zusätzlich zu den beiden Befestigungsstellen am Widerlagerring (2a) eine dritte vertikale Abstützungsstelle vorhanden ist, und
- unter den Traglagern (5) eine Stabilisierungseinrichtung vorgesehen ist, die aus einzelnen Verbindungslaschen (14) gebildet ist, welche auf den den Widerlagerring (2a) durchfassenden Traglager-Befestigungsschrauben (4) stecken, dabei dieselben (4) im unteren Bereich in ihrer seitlichen Lage zueinander fixieren und ausstreben, und sich mit den benachbarten Verbindungslaschen (14) überlappen.

4. Heuwerbungsmaschine nach mindestens einem der Ansprüche 1 bis 3, dadurch gekennzeichnet, daß die Befestigungsschrauben (4) der tangentialen Traglager (5, 5') auf einem einzigen Kreis liegen, dessen Mittelpunkt die Gestellachse (1) ist.

5. Heuwerbungsmaschine nach mindestens einem der Ansprüche 1 bis 4, dadurch gekennzeichnet, daß das Drehgestell (2) als eine zur Nabe hin abgestrebte Haube ausgebildet ist, deren Randbereich durch den Traglager-Verbund stabilisiert wird.

6. Heuwerbungsmaschine nach Anspruch 1, dadurch gekennzeichnet, daß jedes Traglager (5) von einem etwa horizontal verlaufenden Rohr, insbesondere mit mindestens zwei parallelen seitlichen Anlageflächen oder Abflachungen, gebildet ist, an dessen Seiten(flächen) als Befestigungslaschen (6, 7) jeweils mindestens eine Exzenterbuchse mit etwa vertikalem Schraubenaufnahmeloch, ausgerichtet - d. h. in Rohrtoleranzen ausgleichender Lage um die Längsachse gedreht - angebracht, insbesondere angeschweißt, ist/sind.

7. Heuwerbungsmaschine nach Anspruch 1, dadurch gekennzeichnet, daß unterhalb der Traglager (5, 5') Verbindungslaschen (14) untergeschraubt sind, die auf den der Traglager-Befestigung dienenden Befestigungsschrauben (4) stecken und diese im unteren Bereich gegeneinander ab- bzw. ausstreben.

8. Heuwerbungsmaschinne nach Anspruch 1, dadurch gekennzeichnet, daß jedes Zinkentragarm-Traglager (5) zusätzlich zu seinen beiden Befestigungsstellen eine dritte vertikale Abstützstelle besitzt und diese dritte Abstützstelle steuerkurvenseitig angeordnet, insbesondere in der Nähe (im Bereich) eines Steuerhebels (10) der benachbarten Zinkentragarm-Einheit liegt.

9. Heuwerbungsmaschine nach Anspruch 2, dadurch gekennzeichnet, daß jedes Traglager (5') an der einen Seite einen vertikal gelochten Befestigungsvorsprung (Pos. 6) und an der anderen Seite ein seitlich offenes, vertikal gelochtes Profil mit zwei zwischen sich einen Befestigungsvorsprung eines benachbarten Traglagers (5') aufnehmenden Schenkeln (Pos. 7) aufweist.

10. Heuwerbungsmaschine nach Anspruch 1, dadurch gekennzeichnet, daß das Drehgestell (2) von einem obenseitig mit einer Tellerkegelrad-Verzahnung ausgestatteten, untenseitig im Randbereich mit einer Anlagefläche (Widerlagerring 2a) für die Zinkentragarm-Einheiten versehenen einteiligen Formkörper gebildet ist.

11. Heuwerbungsmaschine nach Anspruch 1 oder 2, gekennzeichnet durch eine obenseitig verzahnte glockenartige, im Inneren ausgesteifte/ausgestrebte Drehgestellhaube (2), insbesondere Gußhaube, deren unterer Randbereich bodenseitig als Widerlagerring (2a) für die Traglager (5, 5') der einzelnen Zinkentragarme (3) ausgebildet ist und dabei dieser Widerlagerring (2a) in einer derartigen Höhenlage oder Axiallage liegt, daß jeder in eine symmetrisch aufgebaute Steuerkurve (8) von außen von der Seite einfassende, drehfest mit einem Zinkentragarm oder Schwenkarm (3) verbundene Steuerhebel (10) gegenüber der Horizontalen etwa im gleichgroßen Winkel nach oben und unten verschwenkbar ist.

12. Heuwerbungsmaschine nach Anspruch 1, 2 oder 3, dadurch gekennzeichnet, daß das Drehgestell (2) an einer Nabe (2b) mit mantelseitigen Befestigungsstellen (24) versehen ist, an welchem mit Höhenabstand zueinander zwei Haubenteile (21, 22) befestigt sind, welche die Steuerkurve (8) von oben übergreifen und im äußeren Randbereich aufeinanderliegend miteinander verbunden sind sowie Befestigungsösen für die diese Haubenteile (21, 22) und Befestigungsösen von tangentialen Zinkentragarm-Traglagern (5, 5') durchsetzenden Befestigungsschrauben (4) aufweisen.

13. Heuwerbungsmaschine nach Anspruch 12, dadurch gekennzeichnet, daß die beiden Haubenteile (21, 22) mit ihrem inneren Randbereich die Nabe (2b) umfassen und jeweils einerseits oberhalb und andererseits unterhalb von einem Naben-Flansch (24) angeordnet sowie von gemeinsamen Befestigungsschrauben (23) durchsetzt sind.

14. Heuwerbungsmaschine nach Anspruch 1, 2 oder 3, dadurch gekennzeichnet, daß die Traglager (5) selbst klappsymmetrisch ausgebildet sind und um eine symmetrisch ausgebildete Steuerkurve (8) am Drehgestell (2) wahlweise in einer Anordnung für einen rechtsdrehenden oder für einen linksdrehenden Kreiselrechen befestigt sind.

15. Heuwerbungsmaschine nach Anspruch 1, 2 oder 3, dadurch gekennzeichnet, daß die Traglager (5, 5') selbst klappsymmetrisch ausgebildt und um eine symmetrisch ausgebildete Steuerkurve (8) angeordnet sind sowie Zinkentragarme (3) aufnehmen, deren einseitig belastbare Zinken(gruppen) um 180° verschwenkbar (wendbar) und wahlweise in einer der beiden Schwenk-Endlagen festsetzbar sind und deren Steuerkurbel (10 - 11) mit der Zinken-Wendeachse fluchtet, und daß die Traglager (5, 5') am Drehgestell (2) wahlweise in einer Anordnung für einen rechtsdrehenden oder für einen linksdrehenden Kreiselrechen festschraubbar (befestigt) sind.

**Claims**

1. Hay tedding machine for ring with controlled tines, comprising at least one tine rotor, wherein
- the or each tine rotor possesses an upright frame axle (1), as tine rotor axle,
- on the frame axle (1) a rotationally stationary control cam (8) is mounted and a driven rotary frame (2) is journalled,
- the rotary frame (2) engages over the control cam (8) from above and carries a plurality of tine support arms (3), which extend in their height position perpendicularly to the frame axle (1), and
- each tine support arm (3) carries substantially downwardly orientated tines (pairs of tines) and journals them under cam control pivotally about its own longitudinal axis in a tangential support bearing (5, 5'), which is releasably fixed to the rotary frame (2) and extends outside the control cam (8),

characterized in that

- on the rotary frame (2) a mounting ring (2a) furnished with screw holes for the releasable mounting of the support bearings (5, 5') is present,

- each tangential support bearing (5, 5') is screwed at two points to the mounting ring (2a), the two screwing positions being disposed at opposite sides of a support bearing (5, 5') and spaced from each other in the axial direction of the tine support arm,

- adjacent support bearings (5, 5') overlap each other with fixing eyes (6, 7), and

- for each tine support arm (3) only one fixing screw (4) is used, which, in a generally vertical arrangement, passes through both the rotary frame mounting ring (2a) and also the fixing eyes (6, 7) of adjacent support bearings (5, 5') and secures the support bearings (5, 5') in clamped connection.

2. Hay tedding machine for raking controlled tines, comprising at least one tine rotor, wherein,

- the or each tine rotor possesses an upright frame axle (1), as tine rotor axle,

- on the frame axle (1) a rotationally stationary control cam (8) is mounted and a driven rotary frame (2) is journalled,

- the rotary frame (2) engages over the control cam (8) from above and carries a plurality of tine support arms (3), which extend in their height position perpendicularly to the frame axle (1), and

- each tine support arm (3) carries substantially downwardly orientated tines (pairs of tines) and journals them under cam control pivotally about its own longitudinal axis in a tangential support bearing (5, 5'), which is releasably fixed to the rotary frame (2) and extends outside the control cam (8),

characterized in that

- on the rotary frame (2), a mounting ring (2a) furnished with screw holes for releasably mounting the support bearings (5') is present,

- each tangential support bearing (5') is screwed at two points to the mounting ring (2a), the two screwing positions being disposed on opposite sides of a support bearing (5') and spaced apart in the axial direction of the tine support arm,

- adjacent support bearings (5') engage into one another (are fitted into one another) with fixing eyes (6, 7) and

- for each tine support arm (3) only one fixing screw (4) is used, which, in a generally vertical arrangement, passes through both the rotary frame mounting ring (2a) and also the mutually engaging fixing eyes (6, 7) of adjacent support bearings (5') and secures the support bearings (5') in clamped connection.

3. Hay tedding machine for raking with controlled tines, comprising at least one tine rotor, wherein

- the or each tine rotor possesses an upright frame axle (1), as tine rotor axle,

- on the frame axle (1) a rotationally stationary control cam (8) is mounted and a driven rotary frame (2) is journalled,

- rotary frame (2) engages over the control cam (8) from above and carries a plurality of tine support arms (3), which extend in their height position perpendicularly to the frame axle (1), and

- each tine support arm (3) carries substantially downwardly orientated tines (pairs of tines) and journals them under cam control pivotally about its own longitudinal axis in a tangential support bearing (5, 5'), which is releasably fixed to the rotary frame (2) and extends outside the control can,

characterized in that

- the rotary frame (2) is formed as a hood, which possesses a mounting ring (2a) equipped with screw holes, against which the individual tangential and mutually connected together support bearings (5) bear from below,

- each support bearing (5) is screwed at two points to the mounting ring (2a) , the two screwing positions being disposed on opposite sides of a support bearing (5, 5') and spaced apart in the axial direction of the tine support arm,

- each support bearing (5) is held in the plane in a three- point support, i. e. a third vertical support position is present in addition to the two fixing points on the mounting ring (2a), and

- beneath the support bearings (5) a stabilizing device is provided, which is formed of individual connecting lugs (14), which are fitted on the fixing screws (4) for the support bearings passing through the mounting ring (2a), fix and brace then (4) in the lower region in their lateral position relative to one another, and overlap one another with the adjacent connecting lugs (14).

4. Hay tedding machine according to at least one of Claims 1 to 3, characterized in that the fixing screws (4) of the tangential support bearings (5, 5') lie on a single circle, the centre point of which is the frame axle (1).

5. Hay tedding machine according to at least one of Claims 1 to 4, characterized in that the rotary frame (2) is constructed as a hood braced to the hub, the edge region of which is stabilized by the support bearing assembly.

6. Hay tedding machine according to Claim 1, characterized in that each support bearing (5) is formed of a generally horizontal tube, especially comprising at least two parallel lateral bearing surfaces or flattened zones, at each side (surface) of which at least one eccentric bushing having an approximately vertical screw seating hole is/are orientated as fixing lug (6, 7), i. e. is/are mounted, especially welded, after rotational adjustment about the longitudinal axis into a position which compensates tube tolerances.

7. Hay tedding machine according to Claim 1, characterized in that connecting lugs (14) are screwed beneath the support bearings (5, 5'), which lugs are pushed onto the fixing screws (4) serving for fixing the support hearings and brace these screws against one another in the lower region.

8. Hay tedding machine according to Claim 1, characterized in that each support bearing (5) for a tine support arm possesses, addition to its two fixing points, a third vertical support point and this third support point is disposed on the control cam end, especially lies in the vicinity (in the region) of a control lever (10) of the adjacent tine support arm unit.

9. Hay tedding machine according to Claim 2, characterized in that each support bearing (5') possesses, on the one side, a vertically perforated fixing projection (item 6) and, on the other side, a laterally open, vertically perforated profile having two arms (item 7) seating between them a fixing projection of an adjacent support bearing (5').

10. Hay tedding machine according to Claim 1, characterized in that the rotary frame (2) is formed of a single-piece moulding, furnished at the top with a disc bevel gear tooth system and at the bottom, in the edge region, with a bearing surface (mounting ring 2a) for the tine support arm units.

11. Hay tedding machine according to Claim 1 or 2, characterized by a bell-shaped, internally stiffened or braced rotary frame hood (2), with teeth at the top, especially cast iron hood, the lower edge region of which is formed at the base as mounting ring (2a) for the support bearings (5, 5') of the individual tine support arms (3) and that this mounting ring (2a) lies in a height position or axial position such that each control lever (10), engaging from outside laterally into a symmetrically constructed control cam (8) and rotationally keyed to a tine support arm or pivot arm (3), is pivotal upwards and downwards with respect to the horizontal through approximately equal angles.

12. Hay tedding machine according to Claims 1, 2 or 3, characterized in that the rotary frame (2) is equipped with wall fixing paints (24) on a hub (2b), on which (rotary frame) two hood components (21, 22) are fixed at a vertical spacing apart, which (hood components) engage over the control cam (8) from above and are connected with each other, resting one upon the other, in their outer edge region and also comprise fixing eyes for fixing screws (4) which pass through these hood components (21, 22) and through fixing eyes of tangential tine support arm support bearings (5, 5').

13. Hay tedding machine according to Claim 12, characterized in that the two hood components (21, 22) surround the hub (2b) with their inner edge region and are disposed one above and one below a hub flange (24) and are traversed by common fixing screws (23).

14. Hay tedding machine according to Claims 1, 2 or 3, characterized in that the support bearings (5) are themselves of a construction that remains symmetrical after rotation and are fixed, as desired, about a symmetrically constructed control cam (8) on the rotary frame (2) in an arrangement for a clockwise rotating or for a counter-clockwise rotating rotary rake.

15. Hay tedding machine according to Claims 1, 2 or 3, characterized in that the support bearings (5, 5') are themselves of a construction that remains symmtrical after rotation and are disposed about a symmetrically constructed control cam (8) and carry tine support arms (3), the tines (tine groups) of which, capable of being loaded on one side, can be pivoted (inverted) through 180° and can be secured as desired in one of the two pivoted limiting positions, and the control crank (10 - 11) of which is aligned with the axis of inversion of the tine, and that the support bearings (5, 5') can be screwed (secured) as desired on the rotary frame (2) in an arrangement for a clockwise rotating or for a counter-clockwise rotating rotary rake.

**Revendications**

1. Machine de fenaison pour formation d'andains avec des dents commandées, comportant au moins un rotor à dents et dans laquelle:
- le (chaque) rotor à dents comporte un axe de châssis vertical (1), comme axe de rotor à dents,
- sur l'axe de châssis (1) sont disposés une came de commande (8) non tournante et un châssis rotatif entraîné (2),
- le châssis rotatif (2) s'accroche depuis le haut sur la came de commande (8) et porte plusieurs bras de support de dents (3), qui sont orientés dans leur position haute perpendiculairement à l'axe de châssis (1), et
- chaque bras de support de dents (3) porte des (paires de) dents, orientées sensiblement vers le bas, et est monté, de façon à pouvoir pivoter sous la commande d'une came autour de son propre axe longitudinal, dans un palier porteur tangentiel (5, 5') qui est fixé de façon séparable sur le châssis rotatif (2) en s'étendant à l'extérieur de la came de commande (8),
caractérisée en ce que:
- sur le châssis rotatif (2), il est prévu un anneau de butée (2a), pourvu de trous de passage de boulons pour une fixation séparable des paliers porteurs (5, 5'),
- chaque palier porteur tangentiel (5, 5') est boulonné en deux points sur l'anneau de butée (2a), les deux points de boulonnage étant situés respectivement sur des côtés opposés d'un palier porteur (5, 5') et étant espacés l'un de l'autre dans la direction axiale du bras de support de dents,
- des paliers porteurs adjacents (5, 5') se chevauchent mutuellement par des oreilles de fixation (6, 7), et
- pour chaque bras de support de dents (3) est utilisé seulement un boulon de fixation (4), qui traverse, avec une orientation sensiblement verticale, aussi bien l'anneau de butée (2a) du châssis rotatif que les oreilles de fixation (6, 7) de paliers porteurs adjacents (5, 5') et qui maintient en liaison bloquée les paliers porteurs (5, 5').

2. Machine de fenaison de formation d'andains avec des dents commandées, comportant au moins un rotor à dents et dans laquelle:
- le (chaque) rotor à dents comporte un axe de châssis vertical (1) comme axe de rotor à dents,
- sur l'axe de châssis (1) sont disposés une came de commande (8) immobile en rotation et un châssis rotatif entraîné (2),
- le châssis rotatif (2) s'accroche depuis le haut sur la came de commande (8) et porte plusieurs bras de support de dents (3), qui sont orientés dans leur position haute perpendiculairement à l'axe de châssis (1), et
- chaque bras de support de dents (3) porte des (paires de) dents orientées sensiblement vers le bas, et est monté, de façon à pouvoir pivoter sous la commande d'une came autour de son propre axe longitudinal, dans un palier porteur tangentiel (5, 5') qui est installé de façon séparable sur le châssis rotatif (2) en s'étendant à l'extérieur de la came de commande (8),
     caractérisée en ce que:
- sur le châssis rotatif (2), il est prévu un anneau de butée (2a), pourvu de trous de passage de boulons pour une fixation séparable des paliers porteurs (5'),
- chaque palier porteur tangentiel (5') est boulonné en deux points sur l'anneau de butée (2a), les deux points de boulonnage étant situés respectivement sur des côtés opposés d'un palier porteur (5') et étant espacés l'un de l'autre dans la direction axiale du bras de support de dents,
- des paliers porteurs adjacents (5') s'accrochent l'un dans l'autre (sont enboîtés l'un de l'autre) par des oreilles de fixation (6, 7), et
- pour chaque bras de support de dents (3) est utilisé seulement un boulon de fixation (4) , qui traverse, avec une orientation sensiblement verticale, aussi bien l'anneau de butée (2a) du châssis rotatif que les oreilles de fixation (6, 7), emboîtées l'une dans l'autre, de paliers porteurs adjacents (5') et qui maintient en liaison bloquée les paliers porteurs (5').

3. Machine de fenaison de formation d'andains avec des dents commandées, comportant au moins un rotor à dents et dans laquelle:
- le (chaque) rotor à dents comporte un axe de châssis vertical (1) comme axe (de rotation) de rotor à dents,
- sur l'axe de châssis (1) sont disposés une came de commande (8) immobile en rotation et un châssis rotatif entraîné (2),
- le châssis rotatif (2) s'accroche depuis le haut sur la came de commande (8) et porte plusieurs bras de support de dents (3), qui sont orientés dans leur position haute perpendiculairement à l'axe de châssis (1), et
- chaque bras de support de dents (3) porte des (paires de) dents orientées sensiblement vers le bas et est monté, de façon à pouvoir pivoter sous la commande d'une came autour de son propre axe longitudinal, dans un palier porteur tangentiel (5, 5') qui est fixé de façon séparable sur le châssis rotatif (2) en s'étendant à l'extérieur de la came de commande (8),
     caractérisée en ce que:
- le châssis rotatif (2) est agencé sous forme d'un capot, qui comporte un anneau de butée (2a) pourvu de trous de passage de boulons et contre lequel s'appliquent par dessous les différents paliers porteurs (5) orientés tangentiellement et reliés entre eux,
- chaque palier porteur (5) est boulonné en deux points sur l'anneau de butée (2a), les deux points de boulonnage étant respectivement situés sur des côtés opposés d'un palier porteur (5, 5') et étant espacés l'un de l'autre dans une direction axiale du bras de support de dents,
- chaque palier porteur (5) est maintenu à niveau par un appui à trois points, c'est-à-dire qu'il est prévu en addition aux deux points de fixation sur l'anneau de butée (2a) un troisième point d'appui vertical, et
- en dessous des paliers porteurs (5), il est prévu un dispositif de stabilisation qui est constitué de différentes éclisses de liaison (14), qui s'emboîtent sur les boulons de fixation (4) des paliers porteurs traversant l'anneau de butée (2a), assurent ainsi la fixation relative, quant à leur position latérale, et l'entretoisement desdits boulons (4) dans une zone inférieure et se chevauchent avec les éclisses de liaison adjacentes (14).

4. Machine de fenaison selon au moins l'une des revendications 1 à 3, caractérisée en ce que les boulons de fixation (4) des paliers porteurs tangentiels (5, 5') sont situés sur un seul cercle dont le centre correspond à l'axe de châssis (1).

5. Machine de fenaison selon au moins l'une des revendications 1 à 4, caractérisée en ce que le châssis rotatif (2) est agencé sous la forme d'un capot entretoisé par rapport à un moyeu et dont la zone marginale est stabilisée par l'ensemble des paliers porteurs.

6. Machine de fenaison selon la revendication 1, caractérisée en ce que chaque palier porteur (5) est constitué par un tube orienté à peu près horizontalement, et comportant notamment au moins deux surfaces d'appui ou méplats latéraux parallèles sur les côtés (surfaces latérales) desquels est (sont) disposé(s), en tant qu'éclisses de fixation (6, 7), respectivement au moins un manchon excentrique comportant un trou de réception de boulon orienté à peu près verticalement, qui est fixé notamment par soudage et qui est aligné - c'est-à-dire qu'il est amené par rotation autour de l'axe longitudinal dans une position de compensation des tolérances du tube.

7. Machine de fenaison selon la revendication 1, caractérisée en ce qu'en dessous des paliers porteurs (5, 5') sont boulonnées des éclisses de liaison (14), qui sont emboîtées sur les boulons de fixation (4) servant à la fixation des paliers porteurs et qui étayent ou entretoisent lesdits boulons mutuellement dans une zone inférieure.

8. Machine de fenaison selon la revendication 1, caractérisée en ce que chaque palier porteur (5) de bras de support de dents comporte, en addition à ses deux points de fixation, un troisième point d'appui vertical et ce troisième point d'appui est disposé du côté de la came de commande, en étant placé notamment à proximité (au voisinage) d'un levier de commande (10) de l'unité à bras de support de dents adjacente.

9. Machine de fenaison selon la revendication 2, caractérisée en ce que chaque palier porteur (5') comporte d'un côté une saillie de fixation perforée verticalement (référence 6) et de l'autre côté un profil perforé verticalement, ouvert latéralement et comportant deux branches (référence 7) recevant entre elles une saillie de fixation d'un palier porteur adjacent (5').

10. Machine de fenaison selon la revendication 1, caractérisée en ce que le châssis rotatif (2) est constitué par un corps moulé monobloc, pourvu sur son côté supérieur d'une denture de pignon conique à plateau, et sur son côté inférieur, dans une zone marginale, d'une surface d'appui (anneau de butée 2a) pour les unités à bras de support de dents.

11. Machine de fenaison selon la revendication 1 ou 2, caractérisée par un capot de châssis rotatif (2) en forme de cloche pourvu d'une denture sur son côté supérieur, renforcé/entretoisé à l'intérieur, notamment un capot moulé, dont la zone marginale inférieure est agencée du côté du fond comme un anneau de butée (2a) pour les paliers porteurs (5, 5') des différents bras de support de dents (3) et en ce que, dans ce cas, cet anneau de butée (2a) est placé dans une position verticale ou une position axiale qui est telle que chaque levier de commande (10), monté d'un côté et de l'extérieur dans une came de commande (8) agencée symétriquement et relié sans possibilité de rotation relative à un bras de support de dents ou bras pivotant (3), puisse pivoter vers le haut et vers le bas par rapport à l'horizontale d'angles à peu près identiques.

12. Machine de fenaison selon la revendication 1, 2 ou 3, caractérisée en ce que le châssis rotatif (2) est pourvu sur un moyeu (2b) de zones de fixation (24) situées du côté de la périphérie et sur lesquelles sont fixées, en étant espacées verticalement l'une de l'autre, deux parties de capot (21, 22), qui s'accrochent depuis le haut sur la came de commande (8) et sont reliées entre elles en étant placées l'une sur l'autre dans une zone marginale extérieure, et qui présentent des boulons de fixation (4) traversant des oreilles de fixation de ces parties en forme de capot (21, 22) et des oreilles de fixation de paliers porteurs tangentiels (5, 6) des bras de support de dents.

13. Machine de fenaison selon la revendication 12, caractérisée en ce que les deux parties de capot (21, 22), le moyeu (2b) entourent par leur zone marginale intérieure et sont disposées respectivemnet d'un côté au-dessus et de l'autre côté en dessous d'une bride (24) du moyeu en étant traversées par des boulons communs de fixation (23).

14. Machine de fenaison selon la revendication 1, 2 ou 3, caractérisée en ce que les paliers porteurs (5) sont réalisés avec une symétrie propre de rabattement et sont fixés autour d'une came de commande (8) de forme symétrique sur le châssis rotatif (2) sélectivement dans une disposition correspondant à un rateau circulaire tournant vers la droite ou dans une disposition correspondant à un rateau circulaire tournant vers la gauche.

15. Machine de fenaison selon la revendication 1, 2 ou 3, caractérisée en ce que les paliers porteurs (5, 5') sont agencés avec une symétrie propre de rabattement et sont disposés autour d'une came de commande (8) de forme symétrique et ils reçoivent des bras (3) de support de dents dont des dents (groupes de dents) pouvant être sollicitées d'un côté peuvent pivoter (tourner) de 180° et peuvent être amenées sélectivement dans une des deux positions limites de pivotement tandis que leur manivelle de commande (10 - 11) est en coïncidence avec l'axe de rotation des dents, et en ce que les paliers porteurs (5, 5') peuvent être boulonnés (fixés) sur le châssis rotatif (2) sélectivement dans une disposition correspondant à un rateau circulaire tournant vers la droite ou dans une disposition correspondant à un rateau circulaire tournant vers la gauche.

Fig. 1

Fig. 2

Fig. 3

Fig. 4

Fig. 5

Fig. 6